# EUROPEAN PATENT APPLICATION

(11) **EP 1 273 222 A1**
(43) Date of publication of application: **08.01.2003**
(21) Application number: 02013570.3
(22) Date of filing: 20.06.2002
(51) Int. Cl.: A01D 46/26

(54) **Tool, particularly for beating olives or similar agricultural products**

(30) Priority: 28.06.2001 IT PD20010155
(71) Applicant: Zanon S.n.c. di Zanon Franco E C., 35011 Campodarsego (Padova) (IT)
(72) Inventor: Fabris, Renato, 35138 Padova (IT)
(74) Representative: Modiano, Guido, Dr.-Ing.

(57) **Abstract**

An improved tool particularly for beating olives or similar agricultural products, of the type that comprises two opposite oscillating sectors (12) articulated to a supporting body (11), a corresponding series of rods (14) being fixed in a rack-like fashion to each one of the sectors (12), both sectors (12) being connected to pneumatic-cylinder actuation (13); the tool (10) further comprises a connection (17) to a handling rod (18) that is articulated by means of a hinged joint (19), the stem (41) of the actuation (13) supporting a cross-member (43), a corresponding one of the sectors (12) being coupled directly to each end of the cross-member (43).

## Description

The present invention relates to an improved tool, particularly for beating olives or similar agricultural products.

It is known that olive beating is at least partially automated by means of tools which, despite the variety of their embodiments, all comprise two opposite oscillating sectors which are articulated to a supporting body and are connected to actuation means.

In particular, a common tool particularly for beating olives or similar agricultural products comprises two opposite oscillating sectors, which are articulated to a supporting body and are connected to actuation means, a corresponding series of rods being fixed in a rack-like fashion to each one of such sectors.

Although this type of tool has been commercially available for several years, it has nonetheless proved to be capable of improvement, since a priority of manufacturers is to minimize dimensions and weight.

The aim of the present invention is therefore to provide a tool particularly for beating olives or similar agricultural products that is more compact and lighter than known tools.

An object of the present invention is to provide a tool that is functionally valid, constructively simple and reliable as a whole.

Another object of the present invention is to provide a tool that is highly flexible in terms of operation.

Another object of the present invention is to provide a tool that can be manufactured with known technologies and at costs that are competitive with respect to tools having a similar functionality.

This aim and these and other objects that will become better apparent hereinafter are achieved by an improved tool particularly for beating olives or similar agricultural products, of the type that comprises two opposite oscillating sectors articulated to a supporting body, a corresponding series of rods being fixed in a rack-like fashion to each one of said sectors, both of said sectors being connected to pneumatic-cylinder actuation means, said tool further comprising means for connection to a handling rod that is articulated by means of a hinged joint, said tool being characterized in that the stem of said actuation means supports a cross-member, the corresponding one of said sectors being coupled directly to each end of said cross-member.

Further characteristics and advantages of the present invention will become better apparent from the following description of an embodiment thereof, illustrated only by way of non-limitative example in the accompanying drawings, wherein:

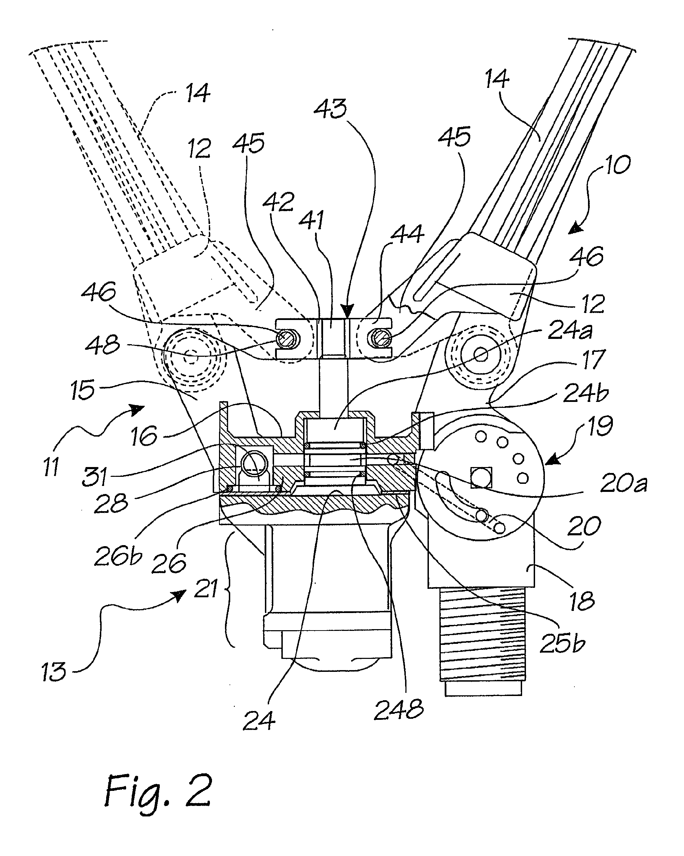

Figures 1 and 2 are general partially sectional side views, with one oscillating sector shown in dashed lines, of a tool according to the invention, in two different operating steps;

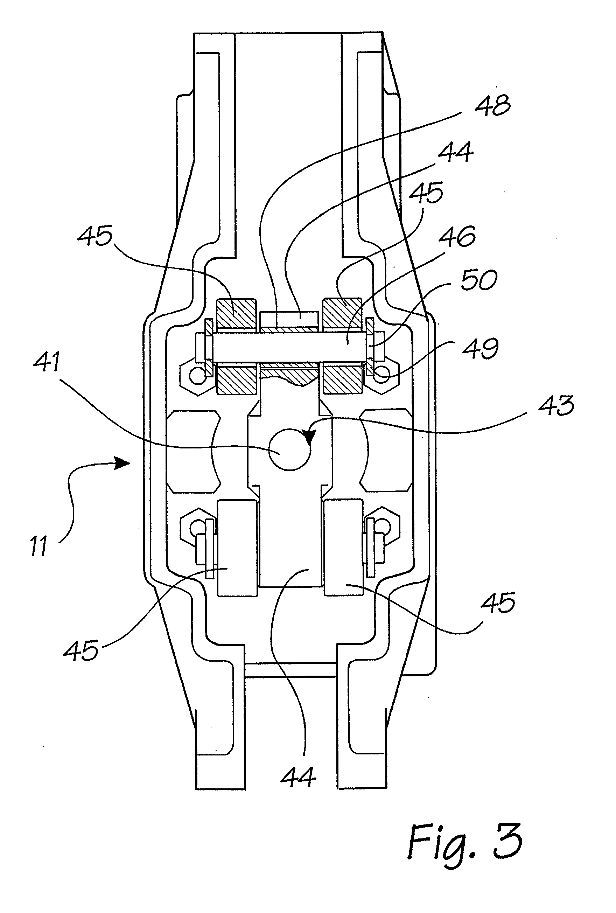

Figure 3 is a partially sectional top view of the tool of Figure 1 with no oscillating sectors.

With reference to the figures, an improved tool particularly for beating olives or similar agricultural products is generally designated by the reference numeral 10.

In particular, the tool 10 comprises two opposite oscillating sectors 12, which are articulated to a supporting body 11 made of an engineering polymer and are connected to actuation means, generally designated by the reference numeral 13, each of which integrates a corresponding series of rack-like rods 14.

The body 11 made of engineering polymer can be ideally divided, in this case, into three sections (or portions): a first portion 15 for the articulation of the sectors 12, a second portion 16 for coupling to the actuation means 13, and a third portion 17 for connection to a handling rod 18.

The rod 18 and the third section 17 are articulated one another by means of a hinged joint 19.

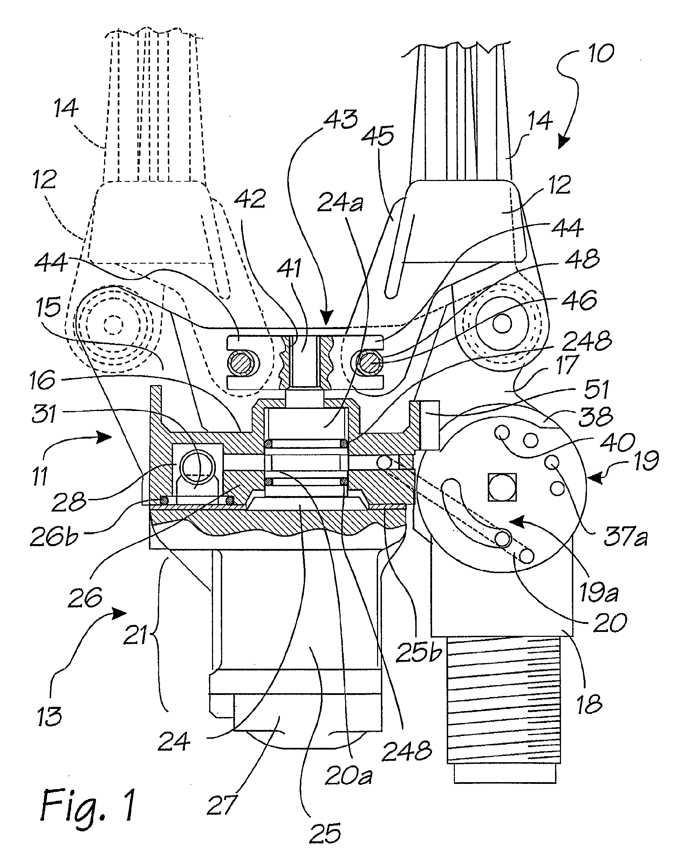

In the joint 19 an internal duct 20 is provided (see Figure 1) for the passage of air for feeding the actuation means 13, which are constituted in this case by a pneumatic cylinder, generally designated by the reference numeral 21.

The cylinder 21, which is of the double-acting type, comprises a piston 24 slideable in a lapped metal sleeve and a second coaxial sleeve for guiding the stem (not shown in the figures), which is arranged within a body 25 and is closed at its ends by a main head 26, which is monolithic with the body 11, and by an opposite secondary head 27.

The end 24a, which is monolithic with the body 25, is shaped so as to define the seats for two sealing gaskets 24f, between which there is a groove 20e that is designed to act as a manifold for the passage of air from the duct 20 to the recess 28 of the distributing valve 31 and to cool the portion affected by the sliding of the stem 41.

A stainless steel plate 25b is interposed between the body 25 and the main head 26 and ensures flatness in the presence of any irregularities caused by the injection-molding of the two components and the seal on the recess 28 by means of elastomer gaskets 26b arranged in the main head 26.

The plate 25b constitutes the sliding surface for the gate of the distributing valve 31, which is per se known.

Feed ducts, not shown in the figures, are formed in said cylinder 21 and partially in the main head 26 and, by intersecting with respective end ducts, switch the feeds between the distributing valve 31 and the cylinder 21 and vice versa.

According to the invention, the stem 41 of the piston 24 is threaded and screwed into a complementarily threaded hole 42 of a cross-member 43 made of tempered steel; two corresponding tabs 45 of said corresponding oscillating sectors 12 are directly coupled to each end 44 of said cross-member.

Each end 44 is in fact fork-shaped for the engagement of the central part of a pin 46.

Each pin 46 supports, in a central region, a roller 48 that is arranged in the fork of the end 44.

Each pin 46 passes through the corresponding tabs 45 of the sectors 12 (between which the fork of the end 44 is interposed), and is retained axially by snap rings 49 accommodated in corresponding annular seats 50 of its ends.

In this manner, the translational motion of the piston 24 is converted directly into the angular movement of the sectors 12 without interposing connecting components.

Compensation is achieved by sizing adequately the depth of the grooves of the ends 44, in which the pins 46 are retained so as to slide by means of the rollers 48.

The handling rod 18 has an articulation that can be locked at preset inclination angles by way of the presence, in the portion 19a of the joint 19, of through holes 37a for a pin 40 that is interposed between the fixed and movable parts.

The holes 37a are distributed along respective circular arcs that cover 30 sexagesimal degrees.

The joint 19 has, in the portion 19a, a semicircular groove 38 for limiting the maneuvering arc against an abutment 51 provided on the support 11.

In practice, it has been found that the present invention has achieved the intended aim and objects.

By directly coupling the oscillating sectors 12 to the cross-member 43, a considerable compaction of the kinematic system for transmitting motion has in fact been achieved, reducing axial dimensions.

Such compaction has led to a reduction in the weight of the tool, with consequent advantages for the user.

The present invention is susceptible of numerous modifications and variations, all of which are within the scope of the appended claims.

The technical details may be replaced with other technically equivalent elements.

The materials and the dimensions may be any according to requirements.

The disclosures in Italian Patent Application No. PD2001A000155 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An improved tool (10) particularly for beating olives or similar agricultural products, of the type that comprises two opposite oscillating sectors (12) articulated to a supporting body (11), a corresponding series of rods (14) being fixed in a rack-like fashion to each one of said sectors (12), both of said sectors (12) being connected to pneumatic-cylinder actuation means (13, 21), said tool (10) further comprising connection means (17) for connection to a handling rod (18) articulated by way of a hinged joint (19), said tool (10) being **characterized in that** the stem (41) of said actuation means (13, 21) supports a cross-member (43), a corresponding one of said sectors (12) being coupled directly to each end (44) of said cross-member (43).

2. The tool according to claim 1, **characterized in that** said actuation means (13) are constituted by a pneumatic cylinder (21), in which the stem (41) of the piston (24) is screwed, by way of its threaded end, into a complementarily threaded hole (42) of said cross-member (43), two corresponding tabs (45) of the corresponding one of said oscillating sectors (12) being rigidly coupled directly to each end (44) of said cross-member (43).

3. The tool according to claim 2, **characterized in that** each end (44) is shaped so as to form a respective fork for the engagement of the central part of a pin (46) that passes through corresponding tabs (45) of said sectors (12).

4. The tool according to claim 3, **characterized in that** said pin (46) supports, in a central region thereof, a roller (48) that is arranged in the corresponding fork.

5. The tool according to claim 3, **characterized in that** said pin (46) is retained axially by snap rings (49) accommodated in corresponding annular seats (50) of its ends.
